# EUROPEAN PATENT APPLICATION

(11) **EP 4 503 233 A1**
(43) Date of publication of application: **05.02.2025**
(21) Application number: 22934280.3
(22) Date of filing: 31.03.2022
(51) Int. Cl.: H01M 10/0583, H01M 10/0587, H01M 50/457, H01M 10/0525

(54) **SECONDARY BATTERY, AND APPARATUS COMPRISING BATTERY**

(71) Applicant: Ningde Amperex Technology Limited, Ningde, Fujian 352100 (CN)
(72) Inventor: FENG, Bo, Ningde, Fujian 352100 (CN); WEI, Zengbin, Ningde, Fujian 352100 (CN)
(74) Representative: Klunker IP Patentanwälte PartG mbB
(86) International application number: PCT/CN2022/084668
(87) International publication number: WO 2023/184443

(57) **Abstract**

A secondary battery, including a positive electrode, a negative electrode, and a separator disposed between the positive electrode and the negative electrode. The positive electrode, the separator, and the negative electrode are sequentially stacked and wound to form a winding structure including a bent portion and a straight portion. The separator includes a substrate, wherein the substrate has a first surface and a second surface opposite to the first surface. A first coating is disposed on the first surface of the substrate, and a second coating is disposed on the second surface of the substrate, wherein, in the bent portion of the winding structure, a first distance between adjacent positive and negative electrodes is d1, and in the straight portion of the winding structure, a second distance between the adjacent positive and negative electrodes is d2, wherein 1<d1/d2<10, and d1 and d2 are measured in a same unit.

## Description

### TECHNICAL FIELD

This application relates to the field of energy storage, and particularly relates to a secondary battery cell and an apparatus including the same.

### BACKGROUND

With the popularization of electronic products such as notebook computers, mobile phones, handheld game consoles and tablet personal computers, the requirements on electrochemical apparatuses (for example, batteries) are increasingly strict. Among many batteries, lithium ion batteries feature a high energy density, a high working voltage, a low self-discharge rate, a small size, a light weight, and the like, and are widely applied to fields such as electric energy storage, portable electronic devices, electric automobiles and the like.

### SUMMARY

With the rapid development of lithium ion batteries applied to the fields such as a consumption terminal, a higher requirement is further posed to charge-discharge cycle performance and energy density of the lithium ion batteries. However, in a low-temperature condition, the actual charge-discharge performance of the lithium ion batteries is much less than a designed value, which restricts further application of the lithium ion batteries.

At present, negative electrodes of most lithium ion batteries prepared by means of an existing battery technology swell continuously in the cycle process, so that the space between positive and negative electrodes is extruded continuously, and the transmission space of an electrolyte is increasingly small, which, eventually, results in a transmission barrier of the electrolyte. Particularly in a bent portion, because of stress concentration here, the transmission barrier of the electrolyte in the bent portion is the most severe. Particularly in the low-temperature cycle, it is unlikely to supplement the electrolyte in the bent portion timely and bridge cut-off of the electrolyte would happen, which results in insufficient lithium intercalation and lithium separation in the bent portion, so that the performance of the battery is affected.

To overcome the above defect, a common method in the field is to increase a gap between the positive and negative electrodes in an initial stage of the battery to reserve space for swelling of the negative electrode, so as to alleviate the transmission barrier of the electrolyte. However, such a method has the deficiency that the gaps of the bent portion and the straight portion of the battery are both increased to cause the increase of the thickness of the battery, resulting in the loss of the volume energy density of the battery.

To solve the above problem and some other problems existing in the field, in an aspect, this application provides a secondary battery, including a positive electrode, a negative electrode, and a separator disposed between the positive electrode and the negative electrode. The positive electrode, the separator, and the negative electrode are sequentially stacked and wound to form a winding structure including a bent portion and a straight portion. The separator includes a substrate, where the substrate has a first surface and a second surface opposite to the first surface. A first coating is disposed on the first surface of the substrate and includes a first polymer, and a second coating is disposed on the second surface of the substrate, where, in the bent portion, the distance between adjacent positive and negative electrodes is d1, and in the straight portion of the winding structure, the distance between adjacent positive and negative electrodes is d2, where 1<d1/d2<10, and d1 and d2 are measured in a same unit.

In some examples, in an area of 250 µm×200 µm on a surface of the first coating, a number of particles of the first polymer having the maximum length in the range of 10 µm and 30 µm are 10-30.In some examples, the first polymer includes a homopolymer formed by any one of the following monomers or a copolymer formed by at least two of the following monomers: vinylidene fluoride, hexafluoropropylene, ethylene, propylene, chloroethylene or chloropropene.

In some examples, a softening point of the first polymer is 90-150°C.

In some examples, Dv50 of the first polymer is 3-16 µm.

In some examples, an orthographic projected area of the first coating on the first surface accounts for 5-60% of an area of the first surface.

In some examples, a coated surface density W1 of the first coating is 0.4-2 g/m².

In some examples, the second coating includes a second polymer, where Dv50 of the second polymer is 0.2-8 µm.

In some examples, the second polymer includes a homopolymer formed by any one of the following monomers or a copolymer formed by at least two of the following monomers: ethyl acrylate, butyl acrylate, ethyl methacrylate, styrene, chlorostyrene, fluorostyrene, vinyltoluene, acrylic acid, methacrylic acid, maleic acid, acrylonitrile or butadiene.

In some examples, a coated surface density W2 of the second coating is 0.1-1 g/m².

In some examples, an adhesive strength between the first coating and the positive electrode is 4-20 N/m, or an adhesive strength between the second coating and the negative electrode is 5-20 N/m.

In some examples, an adhesive strength between the first coating and the positive electrode is 3-15 N/m, or an adhesive strength between the second coating and the positive electrode is 5-20 N/m.

In some examples, numbers of winding layers of the positive and negative electrodes are N, and wherein N≥4.

In some examples, the first coating is disposed on the bent portion.

In some examples, the first coating and/or the second coating include inorganic particles, and the inorganic particles account for 40-90% of the total weight of the coating in the first coating or the second coating. In some other examples, the separator further includes a heat-resistant layer, and the heat-resistant layer may be disposed between the substrate and the first coating or between the substrate and the second coating. The heat-resistant layer includes the inorganic particles.

In another aspect, this application provides an electrochemical apparatus, including the secondary battery according to any one of the examples described above.

In yet another aspect, this application provides an electronic apparatus, including the secondary battery according to any one of the examples described above.

### BRIEF DESCRIPTION OF THE DRAWINGS

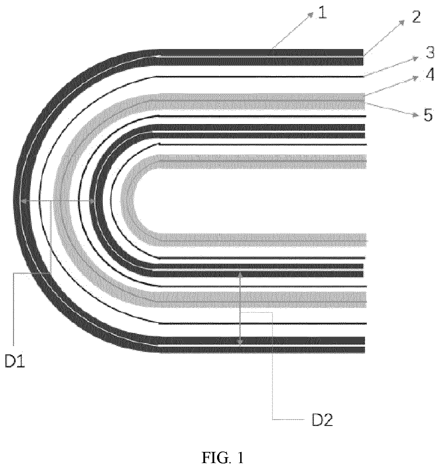

FIG. 1 is a schematic structural diagram of a battery according to some examples of this application.

### DETAILED DESCRIPTION OF THE EMBODIMENTS

This application will be described in detail hereafter. It shall be understood that terms used in the specification and appended claims shall not be explained as being limited to common meaning and meaning in dictionaries, but shall be explained based on meaning and concepts corresponding to technical aspects of this application on a basis of a principle that the inventor is allowed to define the terms properly to perform optimum explanation. Therefore, descriptions shown in the implementation solutions in the specification are merely specific examples for a descriptive purpose rather than showing all technical aspects of this application, and it shall be understood that various equivalents and variants may be made thereon when submitting this application.

As used herein, the terms "substantial", "basic", "essential", and "about" are used to describe and explain minor changes. When used in combination with events or situations, the terms may refer to examples in which the events or situations occur precisely and examples in which the events or situations occur approximately. For example, when used in combination with numerical values, the terms may refer to a variation range less than or equal to ±10% of the numerical values, for example, less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%. For example, if a difference value between two numerical values is less than or equal to ±10% of a mean value of the value (for example, less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%), the two numerical values may be regarded "basically" the same.

In specific implementations and claims, a list of items connected by the term "one of" or other similar terms may refer to anyone in the listed items. For example, if items A and B are listed, the phrase "one of A and B" means only A or only B. In another substance, if the items A, B, and C are listed, the phrase "one of A, B, and C" means only A; only B; or only C. The item A may include a single element or a plurality of elements. The item B may include a single element or a plurality of elements. The item C may include a single element or a plurality of elements.

In specific implementations and claims, a list of items connected by the term "one of" or other similar terms may refer to any combination in the listed items. For example, if the items A and B are listed, the phase "at least one of A, B, and C" means only A; only B; or A and B. In another substance, if the items A, B, and C are listed, the phrase "one of A, B, and C" means only A; or only B; only C; A and B (C is excluded); A and C (B is excluded); B and C (A is excluded); or all of A, B, and C. The item A may include a single element or a plurality of elements. The item B may include a single element or a plurality of elements. The item C may include a single element or a plurality of elements.

Besides, sometimes quantity, ratio, and other numerical values are represented in a format of range herein. It shall be understood that this kind of range format is for convenience and conciseness and it shall be flexibly understood that this kind of range format includes not only numerical values which are definitely appointed as range limitations, but also all individual numerical values or sub-ranges in the range, like each numerical value and sub-range definitely appointed.

### I, Secondary battery

This application provides a secondary battery, including a positive electrode, a negative electrode, and a separator disposed between the positive electrode and the negative electrode. The positive electrode, the separator, and the negative electrode are sequentially stacked and wound to form a winding structure including a bent portion and a straight portion. The separator includes a substrate, where the substrate has a first surface and a second surface opposite to the first surface. A first coating is disposed on the first surface of the substrate and includes a first polymer, and a second coating is disposed on the second surface of the substrate, where, in the bent portion, the distance between adjacent positive and negative electrodes is d1, and in the straight portion of the winding structure, the distance between adjacent positive and negative electrodes is d2, where 1<d1/d2<10, and d1 and d2 are measured in a same unit. The straight portion in the winding structure may be, for example, an upper or lower portion basically parallel in FIG. 1, and the bent portion may be, for example, a portion connecting the upper and lower straight portions in FIG. 1 (FIG. 1 only exhibits a left portion with a right portion omitted). "Upper", "lower", "left", and "right" are relative positions of each portion of the battery in FIG. 1, which will have different orientations along with different battery placing positions or viewing angles.

In some examples, d1/d2 may be about 1.05, about 1.5, about 2, about 3, about 4, about 5, about 6, about 7, about 8, and about 9 or a range between any two numerical values described above.

It is found by researches in this application that by disposing a separate between the positive and negative electrodes, the separator is designed to include the substrate, and the first coating and the second coating respectively located on two opposite surfaces of the substrate, where the first coating includes the first polymer and where the distance d1 between adjacent positive and negative electrodes of the bent portion of the battery and the distance d2 between adjacent positive and negative electrodes of each of the straight portions of the battery meets 1<d1/d2<10 (referring to FIG. 1), so that space may be provided to alleviate swelling of the negative electrode in the battery cycle process. Therefore, partial deletion of the electrolyte as the electrolyte is extruded to be discharged is avoided, a condition of partial deletion of the electrolyte as there is no enough electrolyte to fill the gap due to too large gap may be avoided, the thickness of the main body portion (i.e., the straight portions) of the battery is not significantly increased, the hardness of the battery may further be guaranteed to improve the adhesive force between the separate and the positive and negative electrodes, and finally, the rate capability and the cycle performance of the battery are improved, and the loss of volume energy density of the battery is reduced, and the like.

In some examples, in an area of 250 µm×200 µm on a surface of the first coating, a number of particles of the first polymer having the maximum length in the range of 10 µm and 30 µm are 10-30.. In some examples, the particle number of the first polymer under the above-mentioned condition is about 10, about 15, about 20, about 25, and about 30 or a range between any two numerical values described above. It is found by researches in this application that by controlling the quantity of the first polymer within the range, a better thickness of the bent portion of the battery may be obtained. The greater the quantity is, the greater the corresponding d1 is.

In some examples, the first polymer includes a homopolymer formed by any one of the following monomers or a copolymer formed by at least two of the following monomers: vinylidene fluoride, hexafluoropropylene, ethylene, propylene, chloroethylene or chloropropene. In some examples, the first polymer is polyvinylidene fluoride. In some examples, the first polymer is a copolymer formed by polyvinylidene fluoride and hexafluoropropylene or chloroethylene, for example, a copolymer formed by 95wt% of polyvinylidene fluoride and 5wt% of hexafluoropropylene or 5wt% of chloroethylene. The homopolymer formed by any one of the monomers or the copolymer formed by at least two of the monomer described above may realize the technical solution of this application to obtain ideal battery performance. However, it is found by further research in this application that on the one hand, when conventional waterborne polyvinylidene fluoride (PVDF) as the first polymer forms the first coating of the separator, although the gap may be reserved for swelling of the negative electrode due to its large particle size, as a result of the high softening point of the material, the interfacial adhesive force is low, so that the energy density loss of the battery is great. Moreover, the battery is low in hardness, so that the battery is easy to deform and the winding structure is easy to mismatch, resulting in the safety risk. Besides, due to the low hardness, in the charge and discharge processes of the battery, unordered swelling of the negative electrode will cause an uneven interface between the positive and negative electrodes to lead to partial lithium separation, which affects the battery performance. On the other hand, when non-waterborne PVDF as the first polymer forms the first coating of the separator, after being hot-pressed, the interfacial gap is very small, which is easy to hinder transmission of the electrolyte. Insufficient electrolyte is easy to occur on the battery main body and the corner, which results in insufficient lithium intercalation and even lithium separation. When at least one of hexafluoropropylene, ethylene, propylene, chloroethylene or chloropropene is added into PVDF as the first coating, an ideal gap may be provided for swelling of the negative electrode, and the adhesive force between the separator and the positive and negative electrodes may be guaranteed.

In some examples, a softening point of the first polymer is 90-150°C. In some examples, the softening point of the first polymer is about 95°C, about 100°C, about 105°C, about 110°C, about 115°C, about 120°C, about 125°C, about 130°C, about 135°C, about 140°C, and about 145°C or a range between any two numerical values described above. If the softening point of the first polymer is too low, the separator is easily subjected to a hole-plugging phenomenon, which affects the transmission of lithium ions, thereby finally affecting the electric performance of the battery. If the softening point of the first polymer is too high, the adhesive force between the separator and the electrode plate will be reduced, so that the active material falls in the cycle performance, which finally affects the electric performance of the battery. By controlling the softening point of the first polymer within the range described above, ideal electric performance may be obtained.

In some examples, the Dv50 of the first polymer is 3-16 µm. In some examples, Dv50 of the first polymer is about 4 µm, about 5 µm, about 6 µm, about 7 µm, about 8 µm, about 9 µm, about 10 µm, about 11 µm, about 12 µm, about 13 µm, about 14 µm, and about 15 µm or a range between any two numerical values described above. The greater the Dv50 of the first polymer is, the easier the desired gap (i.e., d1 described above) is prepared on the bent portion of the battery. However, too great Dv50 will also reduce the volume energy density of the battery. By controlling the Dv50 of the first polymer within the range described above, the loss of the volume energy density may be reduced while the space is reserved for swelling of the negative electrode.

In some examples, the first coating further includes a first auxiliary adhesive, and the mass ratio of the first polymer to the first auxiliary adhesive is 2.5-18. In some examples, the mass ratio of the first polymer to the first auxiliary adhesive is 3, 5, 7, 9, 11, 13, 15, and 17 or a range between any two numerical values described above. Not limited to any theory, when the mass ratio of the first polymer to the first auxiliary adhesive is too low (for example, less than 2.5), the content of the first polymer decreases, so that the gap brought by the granular first polymer is reduced, which affects transmission of the electrolyte between interfaces of the first coating, and further affects the adhesive force between the first coating and the electrode plate; and when the mass ratio of the first polymer to the first auxiliary adhesive is too great (for example, greater than 18), the cohesive force of the first coating is low, and the adhesive performance of the first polymer will be reduced with reduction of the cohesive force of the first polymer. By controlling the mass ratio of the first polymer to the first auxiliary adhesive within the range described above, there may be an excellent adhesive force between the first coating and the electrode plate.

This application has no particular limitation to the first auxiliary adhesive as long as the first auxiliary adhesive meets the requirement of this application. For example, the first auxiliary adhesive may include at least one of polymethyl methacrylate, polyacrylonitrile, ethyl acrylate, butyl acrylate, ethyl methacrylate, styrene, chlorostyrene, fluorostyrene, vinyltoluene, acrylic acid, methacrylic acid, maleic acid, acrylonitrile or butadiene.

In some examples, based on the total mass of the first coating, the mass percentage of the first polymer is 85-95%, and the mass percentage of the first auxiliary adhesive is 5-15%. By controlling the contents of the first polymer and the first auxiliary adhesive within the range described above, the first polymer with excellent adhesive performance can be obtained, so that there is a relatively high adhesive force between the first coating and the positive electrode, thereby improving the performance of the lithium ion battery at a low temperature.

In some examples, the first coating further includes a first wetting agent. This application has no particular limitation to the first wetting agent as long as the first wetting agent meets the requirements of this application. For example, the first wetting agent may be polyoxyethylene ether. Based on the total mass of the first coating, the mass percentage of the first wetting agent is 0.1-1%.

In some examples, an orthographic projected area of the first coating on the first surface accounts for 5-60% of an area of the first surface. In some examples, the ratio is about 10%, about 15%, about 20%, about 25%, about 30%, about 35%, about 40%, about 45%, about 50%, and about 55% or a range between any two numerical values described above.

In some examples, a coated surface density W1 of the first coating is 0.4-2 g/m². In some examples, the coated surface density W1 of the first coating is about 0.5 g/m², about 0.6 g/m², about 0.7 g/m², about 0.8 g/m², about 0.9 g/m², about 1.0 g/m², about 1.1 g/m², about 1.2 g/m², about 1.3 g/m², about 1.4 g/m², about 1.5 g/m², about 1.6 g/m², about 1.7 g/m², about 1.8 g/m², and about 1.9 g/m² or a range between any two numerical values described above. The less the coated surface density W1 of the first coating is, the less the thickness of the bent portion of the battery. By controlling the coated surface density W1 of the first coating within the range described above, better performance may be achieved.

In some examples, the second coating includes a second polymer.

In some examples, the Dv50 of the second polymer is 0.2-8 µm. In some examples, Dv50 of the second polymer is about 0.5 µm, about 1.0 µm, about 1.5 µm, about 2.0 µm, about 2.5 µm, about 3.0 µm, about 3.5 µm, about 4.0 µm, about 4.5 µm, about 5.0 µm, about 5.5 µm, about 6.0 µm, about 6.5 µm, and about 7.0 µm or a range between any two numerical values described above.

In some examples, the second polymer includes a homopolymer formed by any one of the following monomers or a copolymer formed by at least two of the following monomers: ethyl acrylate, butyl acrylate, ethyl methacrylate, styrene, chlorostyrene, fluorostyrene, vinyltoluene, acrylic acid, methacrylic acid, maleic acid, acrylonitrile or butadiene.

In some examples, the second polymer is a copolymer formed by styrene, acrylonitrile, isobutyl acrylate and/or ethyl methacrylate. In some examples, the second polymer is formed by 80% of styrene, 5% of butadiene, 5% of isobutyl acrylate, and 10% of acrylonitrile. In some examples, the second polymer is formed by 80% of styrene, 10% of isobutyl acrylate, and 10% of acrylonitrile. In some examples, the second polymer is formed by 80% of styrene, 10% of ethyl methacrylate, and 10% of acrylonitrile.

In some examples, the second coating includes a second auxiliary adhesive. The mass ratio of the second polymer to the second auxiliary adhesive is 2-20. In some examples, the mass ratio of the second polymer to the second auxiliary adhesive is 2, 4, 6, 8, 10, 14, and 16 or a range between any two numerical values described above. Not limited to any theory, when the mass ratio of the second polymer to the second auxiliary adhesive is too low (for example, less than 2), the content of the second polymer decreases, which affects the adhesive force between the second coating and the electrode plate; and when the mass ratio of the second polymer to the second auxiliary adhesive is too great (for example, greater than 20), the cohesive force of the second coating is low, and the adhesive performance of the second polymer is reduced. By controlling the mass ratio of the second polymer to the second auxiliary adhesive within the range described above, there may be an excellent adhesive force between the second coating and the electrode plate.

In some examples, based on the total mass of the second coating, the mass percentage of the second polymer is 75-92.5%, and the mass percentage of the second auxiliary adhesive is 7.5-25%. By controlling the contents of the second polymer and the second auxiliary adhesive within the range described above, the second coating with excellent adhesive performance can be obtained, so that there is a relatively high adhesive force between the second coating and the negative electrode, thereby improving the performance of the lithium ion battery at a low temperature.

This application has no particular limitation to the second auxiliary adhesive as long as the second auxiliary adhesive meets the requirement of this application. For example, the second auxiliary adhesive may include at least one of polymethacrylate, sodium carboxymethylcellulose or dimethyl siloxane.

In some examples, the second coating further includes a second wetting agent. This application has no particular limitation to the second wetting agent as long as the second wetting agent meets the requirements of this application. For example, the second wetting agent may be organosiloxane. Based on the total mass of the second coating, the mass percentage of the second wetting agent is 0.1-1%.

In some examples, a coated surface density W2 of the second coating is 0.1-1 g/m². In some examples, the coated surface density W2 of the second coating is about 0.2g/m², about 0.3g/m², about 0.4g/m², about 0.5g/m², about 0.6g/m², about 0.7g/m², about 0.8g/m², and about 0.9g/m² or a range between any two numerical values described above.

It is found by the applicant that adding the inorganic particles into the separator can further improve the strength and heat resistance of the separator.

In some examples, the first coating and/or the second coating include inorganic particles, and the inorganic particles account for 40-90% of the total weight of the coating in the first coating or the second coating.

In some other examples, the separator further includes a heat-resistant layer, and the heat-resistant layer may be disposed between the substrate and the first coating or between the substrate and the second coating. The heat-resistant layer includes the inorganic particles. By arranging the heat-resistant layer between the substrate and the first coating, the strength and heat resistance of the separator can be further improved. This application has no particular limitation to the thickness of the heat-resistant layer, for example, the thickness may be 0.6-40 µm as long as the heat-resistant layer meets the requirement of this application.

In some other examples, the heat-resistant layer includes the organic particles, the adhesive, a dispersant, and the wetting agent at the mass ratio of (87-98.5): (1-10): (0.5-2): (0-1). The adhesive and the wetting agent are defined as the same as the first auxiliary adhesive and the first wetting agent in the first coating. This application has no particular limitation to the dispersant as long as the dispersant meets the requirements of this application. For example, the dispersant may be polyacrylic acid.

This application has no particular limitation to the organic particles in the heat-resistant layer, the first coating, and the second coating as long as the purpose of this application can be achieved. The inorganic particles include at least one of boehmite, magnesium hydroxide, aluminum oxide, titanium dioxide, silicon dioxide, stannic oxide, magnesium oxide, zinc oxide, barium sulfate, boron nitride or aluminum nitride.

In some examples, the particle size Dv50 of the organic particles is 0.5-35 µm. The particle size of the inorganic particles shall not be too great or too small. When the particle size of the inorganic particles is too great (for example, greater than 35 µm), a thin coating design thereof is hardly achieved, which affects the energy density of the lithium ion battery; and when the particle size of the inorganic particles is too less (for example, less than 0.5 µm), the accumulating pores of the inorganic particles are reduced to affect ion transmission, which affects the dynamic performance of the lithium ion battery. By controlling the Dv50 of the inorganic particles within the range described above, the separator has a relatively high energy density and excellent dynamic performance.

In some examples, an adhesive strength between the first coating and the positive electrode is 4-20 N/m. In some examples, the adhesive strength between the first coating and the positive electrode is about 5 N/m, about 6 N/m, about 7 N/m, about 8 N/m, about 9 N/m, about 10 N/m, about 11 N/m, about 12 N/m, about 13 N/m, about 14 N/m, about 15 N/m, about 16 N/m, about 17 N/m, about 18 N/m, and about 19 N/m or a range between any two numerical values described above.

In some examples, the adhesive strength between the second coating and the negative electrode is 5-20 N/m. In some examples, the adhesive strength between the second coating and the positive electrode is about 6 N/m, about 7 N/m, about 8 N/m, about 9 N/m, about 10 N/m, about 11 N/m, about 12 N/m, about 13 N/m, about 14 N/m, about 15 N/m, about 16 N/m, about 17 N/m, about 18 N/m, and about 19 N/m or a range between any two numerical values described above.

In some examples, the adhesive strength between the first coating and the negative electrode is 3-15 N/m. In some examples, the adhesive strength between the first coating and the negative electrode is about 4 N/m, about 5 N/m, about 6 N/m, about 7 N/m, about 8 N/m, about 9 N/m, about 10 N/m, about 11 N/m, about 12 N/m, about 13 N/m, and about 14 N/m or a range between any two numerical values described above.

In some examples, the adhesive strength between the second coating and the positive electrode is 5-20 N/m. In some examples, the adhesive strength between the second coating and the positive electrode is about 6 N/m, about 7 N/m, about 8 N/m, about 9 N/m, about 10 N/m, about 11 N/m, about 12 N/m, about 13 N/m, about 14 N/m, about 15 N/m, about 16 N/m, about 17 N/m, about 18 N/m, and about 19 N/m or a range between any two numerical values described above.

In some examples, numbers of winding layers of the positive and negative electrodes are N, and wherein N≥4. In some examples, 6≤N≤35. In some examples, 8≤N≤30. In some examples, 10≤N≤25. In some examples, N is about 5, about 10, about 15, about 20, about 25, about 30, and about 35 or a range between any two numerical values described above.

In some examples, the first coating is disposed on the bent portion.

### II, A method for preparing the secondary battery described above

The method for preparing the secondary battery disclosed by this application is described in detail by taking a lithium ion battery as an example.

A separator: the separator includes a substrate, a first coating disposed on a first surface of the substrate, and a second coating disposed on a second surface opposite to the first surface. The substrate is a non-woven fabric, a membrane or a composite membrane, and a material of the substrate is selected from at least one of polyethylene, polypropylene, polyethylene glycol terephthalate, and polyimide. Specifically, a polypropylene porous membrane, a polyethylene porous membrane, a polypropylene non-woven fabric, a polyethylene non-woven fabric or a polypropylene-polyethylene-polypropylene porous composite membrane may be used. The first coating and the second coating are respectively any one of the first coating and the second coating according to the examples described above.

Preparation of the separator: (1) preparation of an inorganic coating: inorganic particles, an adhesive, a dispersant, and a wetting agent are dispersed in a solvent system to obtain a mixture, after being fully stirred, the mixture is coated to one or more surfaces of the substrate of the separator, and the separator is dried to obtain the separator ("an inorganic coating separator" or "a heat-resistant layer" for short) having the inorganic coating located on one or two surfaces of the substrate.

(2) preparation of the first coating: the selected first polymer, first wetting agent, and the first auxiliary adhesive are dispersed in the solvent system to obtain a mixture; in some examples, the inorganic particles may further be added; after being fully stirred and uniformly mixed, the mixture is coated to the first surface of the substrate of the separator or any one surface of the inorganic coating separator in step 1; and the separator is dried to obtain the separator having the first coating located on the first surface of the substrate or the separator having the first coating located on any one surface of the inorganic coating separator in step 1.

(3) preparation of the second coating: the selected second polymer, a second wetting agent, and a secondary auxiliary adhesive are dispersed in a solvent system to obtain a mixture; in some examples, inorganic particles may further be added; after being fully stirred and uniformly mixed, the mixture is coated to the second surface of the separator obtained in step (2); and the separator is dried to obtain a final separator; the final separator has the first coating located on the first surface of the substrate and the second coating located on the second surface of the substrate; or has the inorganic coating located on the first surface of the substrate, the first coating located on the inorganic coating, the inorganic coating located on the second surface of the substrate, and the second coating located on the inorganic coating; or has the inorganic coating located on the first surface of the substrate, the first coating located on the inorganic coating, and the second coating located on the second surface of the substrate; or has the first coating located on the first surface of the substrate, the inorganic coating located on the second surface of the substrate, and the second coating located on the inorganic coating.

Preparation of the negative electrode: a negative electrode active substance, the adhesive, the dispersant, and a conductive material are dispersed in the solvent system at a certain mass ratio to be fully stirred and uniformly mixed to obtain a mixture, the mixture is coated to a negative electrode current collector, and the negative electrode current collector is dried and cold-pressed to obtain the negative electrode.

In some examples, the adhesive includes, but is not limited to, polyvinyl alcohol, carboxymethyl cellulose, hydroxypropyl cellulose, diacetyl cellulose, polyvinyl chloride, carboxylated polyvinyl chloride, polyvinyl fluoride, an ethyleneoxy-containing polymer, polyvinylpyrrolidone, polyurethane, polytetrafluoroethylene, polyvinylidene fluoride, polyethylene, polypropylene, styrene butadiene rubber, acrylic (acrylate) styrene butadiene rubber, epoxy resin or nylon.

In some examples, the negative electrode active substance includes a conductive material. In some examples, the conductive material includes, but is not limited to, natural graphite, artificial graphite, carbon black, acetylene black, Ketjen Black, carbon fiber, metal powder, metal fiber, copper, nickel, aluminum, silver or polyphenylene derivatives.

In some examples, the conductive material includes, but is not limited to, a copper foil, a nickel foil, a stainless steel foil, a titanium foil, foamed nickel, foamy copper, or a polymer substrate coated with a conductive metal.

In some examples, the solvent includes, but is not limited to, N-methylpyrrolidone.

Preparation of the positive electrode: a positive electrode material, the adhesive, the dispersant, and a conductive material are dispersed in the solvent system at a certain mass ratio to be fully stirred and uniformly mixed to obtain a mixture, the mixture is coated to a positive electrode current collector, and the positive electrode current collector is dried and cold-pressed to obtain the positive electrode.

In some examples, the positive electrode current collector may be, but is not limited to, the aluminum foil or the nickel foil.

In some examples, the positive electrode material includes a material capable of absorbing and releasing lithium (Li) (sometimes referred to as "a positive electrode material capable of absorbing/releasing lithium Li hereafter). Examples of the positive electrode material include a material capable of absorbing and releasing lithium (Li) may include one or more of lithium cobalt oxide, lithium nickel manganese cobalt, lithium nickel aluminate cobalt, lithium manganate, lithium iron manganese phosphate, lithium vanadium phosphate, lithium vanadium phosphate, lithium iron phosphate, lithium titanate, and a lithium-containing manganese-base material.

In the above positive electrode material, the chemical formula of lithium cobalt oxide is LiₓCoₐM1_{b}O_{2-c}, where M1 is selected from a group consisting of nickel (Ni), manganese (Mn), magnesium (Mg), aluminum (Al), boron (B), titanium (Ti), vanadium (V), chromium (Cr), ferric (Fe), copper (Cu), zinc (Zn), molybdenum (Mo), stannum (Sn), calcium (Ca), strontium (Sr), tungsten (W), yttrium (Y), lanthanum (La), zirconium (Zr), silicon (Si) and a combination thereof. Values x, a, b, and c are respectively within the following ranges: 0.8≤x≤1.2, 0.8≤a≤1, 0≤b≤0.2, and -0.1≤c≤0.2.

In the above positive electrode material, the chemical formula of lithium nickel manganese cobalt or lithium nickel aluminate cobalt is Li_{y}Ni_{d}M2ₑO_{2-f}, where M2 is selected from a group consisting of cobalt (Co), manganese (Mn), magnesium (Mg), aluminum (Al), boron (B), titanium (Ti), vanadium (V), chromium (Cr), ferric (Fe), copper (Cu), zinc (Zn), molybdenum (Mo), stannum (Sn), calcium (Ca), strontium (Sr), tungsten (W), zirconium (Zr), silicon (Si) and a combination thereof. Values y, d, e, and f are respectively within the following ranges: 0.8≤y≤1.2, 0.3≤d≤0.98, 0.02≤e≤0.7, and -0.1≤f≤0.2.

In the above positive electrode material, the chemical formula of lithium manganate is Li_{z}Mn_{2-g}M3_{g}O₄₋ₕ, where M3 is selected from a group consisting of cobalt (Co), nickel (Ni), magnesium (Mg), aluminum (Al), boron (B), titanium (Ti), vanadium (V), chromium (Cr), ferric (Fe), copper (Cu), zinc (Zn), molybdenum (Mo), stannum (Sn), calcium (Ca), strontium (Sr), tungsten (W), and a combination thereof. Values z, g, and h are respectively within the following ranges: 0.8≤z≤1.2, 0≤g<1.0, and -0.2≤h≤0.2.

In some examples, the conductive material provides the active substance with a conductive path to improve the conductivity of the active substance. The conductive material may include at least one of the following: acetylene black, Ketjen Black, natural graphite, carbon black, carbon fiber, metal powder or metal fiber (for example, copper, nickel, aluminum or silver), but examples of the conductive materials are not limited thereto. In some examples, the amount of the conductive material may be appropriately adjusted. Based on 100 parts by weight of the positive electrode active substance, the conductive material, and the adhesive, the range of the amount of the conductive material is 1 part by weigh to 30 parts by weight.

In some examples, examples of the solvent include, but are not limited to, N-methylpyrrolidone, acetone or water. In some examples, the amount of the solvent may be appropriately adjusted.

In some examples, the adhesive may help adhesion between the active substance and the conductive material or help adhesion between the active substance and the current collector. Examples of the adhesive include, but are not limited to, polyvinylidene fluoride, polyvinylidene chloride, carboxymethylcellulose, polyvinyl acetate, polyvinyl pyrrolidone, polypropylene, polyethylene, and various polymers. Based on 100 parts by weight of the active substance, the conductive material, and the adhesive, the range of the amount of the adhesive is 1 part by weigh to 30 parts by weight.

In some examples, the current collector has a thickness within a range of 3-20 microns, but the content of this application is not limited thereto. The current collector is conductive without causing adverse chemical changes in the manufactured battery. Examples of the current collector include copper, stainless steel, aluminum, nickel, titanium or an alloy (for example, copper-nickel alloy), but the content of this application is not limited thereto. In some examples, a surface of the current collector may include tiny irregularities (for example, surface roughness) to improve adhesion of the surface of the current collector to the active substance. In some examples, the current collector may be used in various forms, and examples thereof include a membrane, a sheet, a foil, a mesh, a porous structural body, a foam body or a non-woven fabric, but the content of this application is not limited thereto.

Electrolyte: in some examples, the electrolyte includes an organic solvent, a lithium salt, and an additive. In some examples, the organic solvent includes at least one of ethylene carbonate (EC), propylene carbonate (PC), diethyl carbonate (DEC), ethyl methyl carbonate (EMC), dimethyl carbonate (DMC), propylene carbonate or ethyl propionate.

In some examples, the lithium salt includes at least one of an organic lithium salt or an inorganic lithium salt. In some examples, the lithium salt includes at least one of lithium hexafluorophosphate (LiPF₆), bistrifluoromethanesulfonimide lithium salt LiN(CF₃SO₂)₂(LiTFSI), lithium bis(fluorosulfonyl)imide Li(N(SO₂F)₂)(LiFSI), lithium bis(oxalate)borate LiB(C₂O₄)₂(LiBOB) or lithium oxalyldifluoroborate LiBF₂(C₂O₄) (LiDFOB).

In some examples, based on the mass of the electrolyte, the content of the lithium salt is 5-30%. In some examples, based on the mass of the electrolyte, the content of the lithium salt is 6-25%. In some examples, based on the mass of the electrolyte, the content of the lithium salt is 8-20%. In some examples, based on the mass of the electrolyte, the and content of the lithium salt is 6-18%.

In some examples, the additive includes at least one of fluoroethylene carbonate, vinylene carbonate, vinyl ethylene carbonate, 1,3-propane sultone, ethylene sulfate, adiponitrile, butanedinitrile, glutaronitrile, 1,3,6-hexanetricarbonitrile, 1,2,6-hexanetricarbonitrile, succinic anhydride, lithium difluorophosphate, and lithium tetrafluoroborate.

Preparation of the battery: the positive electrode, the separator, and the negative electrode are stacked sequentially, so that the separator is located between the positive electrode and the negative electrode to play an isolating role, and N layers are wound to obtain a bare battery cell. The bare battery cell obtained by winding is placed in an outer package, the electrolyte is injected into the bare battery cell and the bare battery cell is packaged, and process flows such as formation, degassing, and side cutting are performed to obtain an intact battery cell. The number of winding layers is defined as follows: based on the bent portion on any side (or the straight portion on any side), a superposed layer of the positive electrode, the separator, and the negative electrode is marked as one layer as it emerges once, and the sum of all superposed layers is the number of winding layers of the battery.

### III, Electrochemical apparatus

This application further provides an electrochemical apparatus, including the secondary battery according to the content described above. In some examples, the secondary battery is a lithium secondary battery, for example, a lithium metal secondary battery, a lithium ion secondary battery, a lithium polymer secondary battery or a lithium ion polymer secondary battery.

### VI, Electronic apparatus

This application further provides an electronic apparatus, including the secondary battery according to the content described above.

According to some examples of this application, the electronic apparatus includes, but is not limited to, a notebook computer, a pen input type computer, a mobile computer, an E-book player, a portable phone, a portable fax machine, a portable copying machine, a portable printer, a head-mounted stereo headphone, a video tape recorder, a liquid crystal television, a handheld cleaner, a portable CD machine, a mini disk, a transceiver, an electronic notebook, a calculator, a storage card, a portable sound recorder, a radio, a standby power supply, a motor, an automobile, a motorcycle, an assistant bicycle, a bicycle, a lighting apparatus, a toy, a game machine, a clock, an electric tool, a flash light, a camera, a household large storage battery, and the like.

### V, Specific examples

This application will be further described in detail below in conjunction with examples. However, it shall be understood that the examples below are merely examples, and the examples of this application are not limited thereto.

### Examples 1-45 and comparative examples 1-3

### Example 1

Separator: (1) boehmite, polymethyl methacrylate, polyacrylic acid, and polyoxyethylene ether were dispersed in a solvent system (water) at a mass ratio of 93.1%: 5.0%: 1.5%: 0.4% to be fully and uniformly stirred to obtain a mixture, the mixture was coated to a first surface of a substrate of the separator, and the substrate was dried to obtain the separator having an inorganic coating located on the first surface of the substrate (an "inorganic coating separator" or "a heat-resistant layer" for short). Although the inorganic particles were coated to the first surface of a base membrane of the substrate here, it should be understood that the inorganic particles could also be coated to another surface of the base membrane of the substrate or were coated to both surfaces of the base membrane of the substrate or the inorganic particles were not coated to both surfaces of the base membrane of the substrate.

(2) the selected first polymer (polyvinylidene fluoride, 100%), first auxiliary adhesive (polyacrylonitrile), and first wetting agent (polyoxyethylene ether) were dispersed in water in a proportion of 89.5%, 10%, and 0.5% to be fully and uniformly stirred and mixed to obtain a mixture, the mixture was coated to the first surface of the separator of the inorganic coating obtained in step (1) (that is, the first polymer was coated to the inorganic coating), and the separator was dried to obtain the separator having the first coating located on the first surface of the separator of the inorganic coating.

(3) the selected second polymer (a copolymer formed by polymerization of 80% of styrene, 10% of isobutyl acrylate, and 10% of acrylonitrile), second auxiliary adhesive (polymethacrylate), and second wetting agent (organosiloxane) were dispersed in water at a mass ratio of 79.5%: 20%: 0.5% to be fully and uniformly stirred and mixed to obtain a mixture, the mixture was coated to the second surface of the separator of the inorganic coating obtained in step (2), and the separator was dried to obtain the separator needed in the example.

In the process of preparing the separator, the coverage rate of the first coating (that is, a proportion of an orthographic projected area of the first coating on the first surface) is 40%, the softening point of the first polymer is 125°C, Dv50 of the first polymer is 12 µm, the surface density W1 of the first polymer is 1g/m², and in the area of 250 µm×200 µm on the surface of the first coating, the particle number of the first polymer with the length between 10 µm and 30µm is 25. Dv50 of the second polymer is 0.7 µm, and the surface density W2 of the second polymer is 0.2 g/m².

Positive electrode: the positive electrode material lithium cobalt oxide, the conductive agent acetylene black, and the adhesive polyvinylidene fluoride (PVDF) were fully stirred and uniformly mixed in an N-methylpyrrolidone solvent system at a mass ratio of 97: 2: 1 to obtain a mixture, the mixture was coated to an Al foil of a positive electrode current collector, and the positive electrode current collector was dried and cold-pressed to obtain the positive electrode.

Negative electrode: the active substance artificial graphite, the conductive agent acetylene black, the adhesive styrene butadiene rubber (SBR), and the thickener carbon sodium methyl cellulose (CMC) were fully stirred and uniformly mixed in a deionized water solvent system at a mass ratio of about 95: 2: 2: 1 to obtain a mixture, the mixture was coated to a Cu foil, and the Cu foil was dried and cold-pressed to obtain the negative electrode.

Electrolyte: in an argon atmosphere glovebox with the water content <10ppm, ethylene carbonate (EC for short), diethyl carbonate (DEC for short), and propylene carbonate (PC for short) were uniformly mixed at a mass ratio of 2: 6: 2, the fully dried lithium salt LiPF₆ was dissolved in the above solvent, with the content of LiPF₆ being 1 mol/L, and 1.5% of 1,3-propane sultone, 3% of fluoroethylene carbonate, and 2% of adiponitrile were added. The contents of substances are based on the total weight of the electrolyte.

Preparation of the battery: the positive electrode, the separator, and the negative electrode were stacked sequentially, so that the separator was located between the positive electrode and the negative electrode to play an isolating role, the separator was wound and placed in the outer package, the prepared electrolyte was injected into the separator, the separator was packaged, and processes such as formation, hot-pressing, degassing, and side cutting were performed to obtain the battery. The number of winding layers is 20. In the bent portion of the winding structure, the distance between adjacent positive and negative electrodes is d1, and in the straight portion of the winding structure, the distance between adjacent positive and negative electrodes is d2, where d1/d2 is 2, and d1 and d2 are measured in a same unit. d1/d2 may be realized, for example, by coating or a hot-pressing technology. When the weight of the coating is heavy, d1 is great as well. After the battery is hot-pressed, d1 is substantially unchanged, and d2 is significantly reduced. According to different coating weights and hot-pressing conditions, different d1 and d2 may be obtained, so that the magnitude of d1/d2 is controlled. Besides, the magnitude of d1/d2 may also be controlled by non-uniform coating. For example, the first coating is arranged to be located on the bent portion mainly.

Differences of battery parameters in examples 1-45 and comparative examples 1-3 are specifically shown in the following table 1. Except for example 3 which has no first/second auxiliary adhesives and first/second wetting agents correspondingly as a result of no coating, types and contents of the first/second auxiliary adhesives and first/second wetting agents in other examples and comparative examples are the same as parameters in example 1, which are no longer repeatedly described in the table. Different parameter settings in the examples and comparative examples are merely exhibited in the following table. The difference between example 45 and example 4 merely lies in that example 43 does not contain the inorganic coating.

**Table 1**

| | d1/d2 | Number of winding layers | Particle number of first polymer^{[1]} | Coverage rate of first coating, % | Type and content of first polymer | Softenin g point of first polymer °C | Dv50 of first polym er, µm | Surface density W1 of first polymer, g/m² | Type and content of second polymer | Dv50 of second polymer, µm | Surface density W2 of second polymer, g/m² |
|---|---|---|---|---|---|---|---|---|---|---|---|
| Example 1 | 2 | 20 | 25 | 40 | Polyvinyli dene fluoride, 100% | 125 | 12 | 1 | 80% of styrene, 10% of isobutyl acrylate, 10% of acrylonitrile | 0.7 | 0.2 |
| Example 2 | 3 | 20 | 25 | 40 | Polyvinyli dene fluoride, 100% | 125 | 12 | 1 | 80% of styrene, 10% of isobutyl acrylate, 10% of acrylonitrile | 0.7 | 0.2 |
| Example 3 | 4 | 20 | 25 | 40 | Polyvinyli dene fluoride, 100% | 125 | 12 | 1 | 80% of styrene, 10% of isobutyl acrylate, 10% of acrylonitrile | 0.7 | 0.2 |
| Example 4 | 5 | 20 | 25 | 40 | Polyvinyli dene fluoride, 100% | 125 | 12 | 1 | 80% of styrene, 10% of isobutyl acrylate, 10% of acrylonitrile | 0.7 | 0.2 |
| Example 5 | 6 | 20 | 25 | 40 | Polyvinyli dene fluoride, 100% | 125 | 12 | 1 | 80% of styrene, 10% of isobutyl acrylate, 10% of acrylonitrile | 0.7 | 0.2 |
| Example 6 | 7 | 20 | 25 | 40 | Polyvinyli dene fluoride, 100% | 125 | 12 | 1 | 80% of styrene, 10% of isobutyl acrylate, 10% of acrylonitrile | 0.7 | 0.2 |
| Example 7 | 8 | 20 | 25 | 40 | Polyvinyli dene fluoride, 100% | 125 | 12 | 1 | 80% of styrene, 10% of isobutyl acrylate, 10% of acrylonitrile | 0.7 | 0.2 |
| Example 8 | 9 | 20 | 25 | 40 | Polyvinyli dene fluoride, 100% | 125 | 12 | 1 | 80% of styrene, 10% of isobutyl acrylate, 10% of acrylonitrile | 0.7 | 0.2 |
| Example 9 | 1.05 | 20 | 25 | 40 | Polyvinyli dene fluoride, 100% | 125 | 12 | 1 | 80% of styrene, 10% of isobutyl acrylate, 10% of acrylonitrile | 0.7 | 0.2 |
| Example 10 | 1.5 | 20 | 25 | 40 | Polyvinyli dene fluoride, 100% | 125 | 12 | 1 | 80% of styrene, 10% of isobutyl acrylate, 10% of acrylonitrile | 0.7 | 0.2 |
| Example 11 | 5 | 10 | 25 | 40 | Polyvinyli dene fluoride, 100% | 125 | 12 | 1 | 80% of styrene, 10% of isobutyl acrylate, 10% of acrylonitrile | 0.7 | 0.2 |
| Example 12 | 5 | 15 | 25 | 40 | Polyvinyli dene fluoride, 100% | 125 | 12 | 1 | 80% of styrene, 10% of isobutyl acrylate, 10% of acrylonitrile | 0.7 | 0.2 |
| Example 13 | 5 | 25 | 25 | 40 | Polyvinyli dene fluoride, 100% | 125 | 12 | 1 | 80% of styrene, 10% of isobutyl acrylate, 10% of acrylonitrile | 0.7 | 0.2 |
| Example 14 | 5 | 20 | 10 | 40 | Polyvinyli dene fluoride, 100% | 125 | 12 | 1 | 80% of styrene, 10% of isobutyl acrylate, 10% of acrylonitrile | 0.7 | 0.2 |
| Example 15 | 5 | 20 | 15 | 40 | Polyvinyli dene fluoride, 100% | 125 | 12 | 1 | 80% of styrene, 10% of isobutyl acrylate, 10% of acrylonitrile | 0.7 | 0.2 |
| Example 16 | 5 | 20 | 20 | 40 | Polyvinyli dene fluoride, 100% | 125 | 12 | 1 | 80% of styrene, 10% of isobutyl acrylate, 10% of acrylonitrile | 0.7 | 0.2 |
| Example 17 | 5 | 20 | 30 | 40 | Polyvinyli dene fluoride, 100% | 125 | 12 | 1 | 80% of styrene, 10% of isobutyl acrylate, 10% of acrylonitrile | 0.7 | 0.2 |
| Example 18 | 5 | 20 | 25 | 10 | Polyvinyli dene fluoride, 100% | 125 | 12 | 1 | 80% of styrene, 10% of isobutyl acrylate, 10% of acrylonitrile | 0.7 | 0.2 |
| Example 19 | 5 | 20 | 25 | 20 | Polyvinyli dene fluoride, 100% | 125 | 12 | 1 | 80% of styrene, 10% of isobutyl acrylate, 10% of acrylonitrile | 0.7 | 0.2 |
| Example 20 | 5 | 20 | 25 | 30 | Polyvinyli dene fluoride, 100% | 125 | 12 | 1 | 80% of styrene, 10% of isobutyl acrylate, 10% of acrylonitrile | 0.7 | 0.2 |
| Example 21 | 5 | 20 | 25 | 50 | Polyvinyli dene fluoride, 100% | 125 | 12 | 1 | 80% of styrene, 10% of isobutyl acrylate, 10% of acrylonitrile | 0.7 | 0.2 |
| Example 22 | 5 | 20 | 25 | 60 | Polyvinyli dene fluoride, 100% | 125 | 12 | 1 | 80% of styrene, 10% of isobutyl acrylate, 10% of acrylonitrile | 0.7 | 0.2 |
| Example 23 | 5 | 20 | 25 | 40 | 95% of polyvinylid ene fluoride, 5% of hexafluoro propylene | 125 | 12 | 1 | 80% of styrene, 10% of isobutyl acrylate, 10% of acrylonitrile | 0.7 | 0.2 |
| Example 24 | 5 | 20 | 25 | 40 | 95% of polyvinylid ene fluoride, 5% of chloroethyl ene | 125 | 12 | 1 | 80% of styrene, 10% of isobutyl acrylate, 10% of acrylonitrile | 0.7 | 0.2 |
| Example 25 | 5 | 20 | 25 | 40 | Polyvinyli dene fluoride, 100% | 90 | 12 | 1 | 80% of styrene, 10% of isobutyl acrylate, 10% of acrylonitrile | 0.7 | 0.2 |
| Example 26 | 5 | 20 | 25 | 40 | Polyvinyli dene fluoride, 100% | 110 | 12 | 1 | 80% of styrene, 10% of isobutyl acrylate, 10% of acrylonitrile | 0.7 | 0.2 |
| Example 27 | 5 | 20 | 25 | 40 | Polyvinyli dene fluoride, 100% | 140 | 12 | 1 | 80% of styrene, 10% of isobutyl acrylate, 10% of acrylonitrile | 0.7 | 0.2 |
| Example 28 | 5 | 20 | 25 | 40 | Polyvinyli dene fluoride, 100% | 150 | 12 | 1 | 80% of styrene, 10% of isobutyl acrylate, 10% of acrylonitrile | 0.7 | 0.2 |
| Example 29 | 5 | 20 | 25 | 40 | Polyvinyli dene fluoride, 100% | 125 | 3 | 1 | 80% of styrene, 10% of isobutyl acrylate, 10% of acrylonitrile | 0.7 | 0.2 |
| Example 30 | 5 | 20 | 25 | 40 | Polyvinyli dene fluoride, 100% | 125 | 7 | 1 | 80% of styrene, 10% of isobutyl acrylate, 10% of acrylonitrile | 0.7 | 0.2 |
| Example 31 | 5 | 20 | 25 | 40 | Polyvinyli dene fluoride, 100% | 125 | 16 | 1 | 80% of styrene, 10% of isobutyl acrylate, 10% of acrylonitrile | 0.7 | 0.2 |
| Example 32 | 5 | 20 | 25 | 40 | Polyvinyli dene fluoride, 100% | 125 | 12 | 0.4 | 80% of styrene, 10% of isobutyl acrylate, 10% of acrylonitrile | 0.7 | 0.2 |
| Example 33 | 5 | 20 | 25 | 40 | Polyvinyli dene fluoride, 100% | 125 | 12 | 1.5 | 80% of styrene, 10% of isobutyl acrylate, 10% of acrylonitrile | 0.7 | 0.2 |
| Example 34 | 5 | 20 | 25 | 40 | Polyvinyli dene fluoride, 100% | 125 | 12 | 2 | 80% of styrene, 10% of isobutyl acrylate, 10% of acrylonitrile | 0.7 | 0.2 |
| Example 35 | 5 | 20 | 25 | 40 | Polyvinyli dene fluoride, 100% | 125 | 12 | 1 | 80% of styrene, 5% of butadiene, 5% of isobutyl acrylate, 10% of acrylonitrile | 0.7 | 0.2 |
| Example 36 | 5 | 20 | 25 | 40 | Polyvinyli dene fluoride, 100% | 125 | 12 | 1 | 80% of styrene, 10% of ethyl methacrylate , 10% of acrylonitrile | 0.7 | 0.2 |
| Example 37 | 5 | 20 | 25 | 40 | Polyvinyli dene fluoride, 100% | 125 | 12 | 1 | 80% of styrene, 10% of isobutyl acrylate, 10% of acrylonitrile | 0.2 | 0.2 |
| Example 38 | 5 | 20 | 25 | 40 | Polyvinyli dene fluoride, 100% | 125 | 12 | 1 | 80% of styrene, 10% of isobutyl acrylate, 10% of acrylonitrile | 1.5 | 0.2 |
| Example 39 | 5 | 20 | 25 | 40 | Polyvinyli dene fluoride, 100% | 125 | 12 | 1 | 80% of styrene, 10% of isobutyl acrylate, 10% of acrylonitrile | 3 | 0.2 |
| Example 40 | 5 | 20 | 25 | 40 | Polyvinyli dene fluoride, 100% | 125 | 12 | 1 | 80% of styrene, 10% of isobutyl acrylate, 10% of acrylonitrile | 5 | 0.2 |
| Example 41 | 5 | 20 | 25 | 40 | Polyvinyli dene fluoride, 100% | 125 | 12 | 1 | 80% of styrene, 10% of isobutyl acrylate, 10% of acrylonitrile | 8 | 0.2 |
| Example 42 | 5 | 20 | 25 | 40 | Polyvinyli dene fluoride, 100% | 125 | 12 | 1 | 80% of styrene, 10% of isobutyl acrylate, 10% of acrylonitrile | 0.7 | 0.1 |
| Example 43 | 5 | 20 | 25 | 40 | Polyvinyli dene fluoride, 100% | 125 | 12 | 1 | 80% of styrene, 10% of isobutyl acrylate, 10% of acrylonitrile | 0.7 | 0.6 |
| Example 44 | 5 | 20 | 25 | 40 | Polyvinyli dene fluoride, 100% | 125 | 12 | 1 | 80% of styrene, 10% of isobutyl acrylate, 10% of acrylonitrile | 0.7 | 1 |
| Example 45^{[2]} | 5 | 20 | 25 | 40 | Polyvinyli dene fluoride, 100% | 125 | 12 | 1 | 80% of styrene, 10% of isobutyl acrylate, 10% of acrylonitrile | 0.7 | 0.2 |
| Compara tive example 1 | 1 | 20 | 25 | 40 | 80% of styrene, 10% of isobutyl acrylate, 10% of acrylonitril e copolymer | 125 | 12 | 1 | 80% of styrene, 10% of isobutyl acrylate, 10% of acrylonitrile | 0.7 | 0.2 |
| Compara tive example 2 | 11 | 20 | 25 | 40 | Polyvinyli dene fluoride, 100% | 125 | 12 | 1 | 80% of styrene, 10% of isobutyl acrylate, 10% of acrylonitrile | 0.7 | 0.2 |
| Compara tive example 3 | 5 | 20 | / | / | | / | / | / | / | / | / |

| | | | | | | | | | | | |
|---|---|---|---|---|---|---|---|---|---|---|---|
| [1]: the particle number here is the particle number of the first polymer with the maximum length between 10 µm and 30 µm in the area of 250 µm×200 µm on a surface of the first coating. [2]: the difference between example 45 and example 1 lies in that the substrate of the separator of example 45 does not have the heat-resistant layer formed by the inorganic particles, where the first coating and the second coating are located on the first surface and the second surface of the substrate of the separator. | | | | | | | | | | | |

It may be known from the above table 1 that the difference between examples 1-45 and comparative examples 1-3 is d1/d2, the number of winding layers, the particle number of the first polymer with the maximum length between 10 µm and 30 µm in the area of 250 µm×200 µm on the surface of the first coating, the coverage rate of the first coating, the type and content of the first polymer, the softening point of the first polymer, Dv50 of the first polymer, the surface density of the first polymer, the type and content of the second polymer, Dv50 of the second polymer, the surface density of the second polymer, with or without coatings and the like.

Except for the above differences, the negative electrode, the electrolyte, the separator, and the like in examples 1-45 and comparative examples 1-3 have no differences.

### Test method

### (1) Test method for d1 and d2:

Computed tomography (CT) is amplified to 300% multiplying power to respectively scan the bent portion and the straight portion of the battery to obtain a cross section image, 10 points are taken to measure the shortest distance between two adjacent positive electrode current collectors in the bent portion, and it is averaged to obtain D1 ("adjacent" here did not mean physical contact but means that there is no positive electrode current collector between the two positive electrode current collectors measured, and apparently, there would also be the separator and the negative electrode current collector between the two positive electrode current collectors), d1=D1/2, and 10 points are taken to measure the shortest distance between the two adjacent positive electrode current collectors in the straight portion, and it is averaged to obtain D2, d2=D2/2, the two adjacent positive electrode current collectors selected from the bent portion and the two adjacent positive electrode current collectors selected from the straight portion are connected correspondingly, that is, as shown in FIG. 1, the two positive electrode current collectors for testing the bent portion and the positive electrode current collectors for testing the straight portion are the same two positive electrode current collectors.

Specifically, referring to FIG. 1, 1, positive electrode membrane (positive electrode active substance layer), 2, positive electrode current collector, 3, separator, 4, negative electrode membrane (negative electrode active substance layer), and 5, negative electrode current collector. Upper and lower surfaces of the positive electrode current collector 2 both are provided with the positive electrode membrane (positive electrode active substance layer) 3, and upper and lower surfaces of the negative electrode current collector 5 both are provided with the negative electrode membrane (negative electrode active substance layer) 4. 10 points are taken to measure the distance between the two adjacent positive electrode current collectors of the bent portion, and it is averaged by D1; 10 points are taken to measure the distance between the two adjacent positive electrode current collectors of the straight portion, and it is averaged to get D2; and d1=D1/2, and d2=D2/2 are calculated.

### (2) Particle number of the first polymer

The separator coated with the first coating is cut into 10 mm×10 mm samples, the samples are placed under an SEM to be observed at a 500-time amplification factor, any 5 areas of 250 µm×200 µm are selected in the field of view for observation, and the particle number of the first polymer particles with the maximum length between 10 µm and 30 µm in the selected area is recorded and averaged to obtain the particle number of the first polymer particles with the maximum length between 10 µm and 30 µm in the region of unit area of the first coating.

### (3) Coverage rate of the first coating

The separator of the first coating is cut into a 10 mm×10 mm sample, then the sample is placed under an SEM to be observed at a 500-time amplification factor and 5 areas of 250 µm×200 µm are selected in the field of view for observation. The first coating is subjected to identification and fitting calculation by using an image segmentation algorithm to obtain a coverage area S thereof, with the coverage rate= S/(250×200)*100%, and average coverage rates of 5 positions are taken to obtain the coverage rate of the first coating.

### (4) Softening point

5 mg of first polymer samples prepared in examples and comparative examples are respectively taken by using a universal differential scanning calorimeter (DSC) method and heated to 150°C at a heating rate of 5 °C/min, a DSC curve is collected, and the softening point of the first polymer is determined by the obtained DSC curve, i.e., the softening temperature.

### (5) Particle Dv50

The first polymer is dispersed in deionized water and uniformly stirred. Slurry is taken to measure the particle size through a Malvern particle size analyzer: the dispersed sample is added into the Malvern particle size analyzer to start the test. The test is finished to obtain particle size data of the first polymer, respectively. Dv50 of the inorganic particles and the second polymer is tested by the same method.

### (6) Surface density

An electronic scale is used to test the surface density of the coating, the precision being 0.0001 g. The substrate of the separator which is not coated is taken and cut into 5 pieces of 10000 mm², and they are weighed to take an average value m to obtain the weight of the substrate. The separator coated with the first coating is taken and cut into 5 pieces of 10000 mm², they are weighed to take an average value M to obtain the weight of the separator coated with the first coating, the surface density of the first coating is M-m, and the unit could be converted into g/m² by unit conversion. The surface density of the second coating is tested by the same method.

### (7) Adhesive force

Dry pressing adhesive forces between the separator and the positive and negative electrodes are tested by using a 180-force peeling test standard, the separator and the positive and negative electrodes are cut into 54.2 mm×72.5 mm samples, the separator and the positive/negative electrode are compounded and hot-pressed by using a hot press for 85 s under a condition that the temperature is 85°C and the pressure is 1 Mpa, the compounded sample is cut into 15 mm×54.2 mm strips, and the adhesive force is tested according to a 180°peeling test standard. Testes are respectively performed to obtain the adhesive force between the first coating and the positive electrode, the adhesive force between the first coating and the negative electrode, the adhesive force between the second coating and the positive electrode, and the adhesive force between the second coating and the negative electrode.

### (7) Battery width

The battery width is tested by using an image projector: the wound battery is placed between two transparent glass plates, where the length direction of the battery is parallel to the width direction of the glass plates, the width direction of the battery is parallel to the length direction of the glass plates, the length of the glass plates is greater than at least 100% of the width of the battery cell, and the width of the glass plates is greater than at least 10% of the battery length. In a place where the battery is not covered in the length direction of the glass plates, the battery is clamped by using two 30 kg clamps, then the battery is flatwise placed on a measuring table top of the image projector, the width of the battery cell is measured by using the image projector, widths of 5 positions are tested in the length direction, and an average value is taken to obtain the battery width.

### (8) Battery hardness

Battery hardness is tested by using a three-point bending method: the battery hardness is measured at 25°C, the battery is completely discharged to 3.0V, and a tab is subjected to insulation protection. A separation distance between supporting rods under the hardness test clamp of a universal tester (Instron-3365) is adjusted to 2/3 of the battery width, the battery is flatwise placed on the lower clamp, and the width direction is perpendicular to the supporting rods. An upper pressure head of the clamp is adjusted to be perpendicular to the width direction and is located right in the middle of the battery, the upper pressure head pressed downward at a rate of 5 mm/min, a deformation displacement of the battery is recorded when the upper pressure head begins to contact the battery, and when a loading force begins to decrease from maximum, the test is stopped, and the maximum anti-deformation force is taken as maximum hardness of the battery. The lower supporting rod is arc-shaped, with a diameter of 10 mm; and the upper pressure head is arc-shaped, with a diameter of 10 mm.

### (9) Method for testing rate discharge performance of the battery

0.5C discharge performance at -20°C: the battery is left still for 5 min in a 25°C environment and is subjected to constant current charge under a 1.5C charge current till the battery voltage is 4.45V, is subjected to 4.45V constant voltage charge till the charge current was 0.05C, after being left still for 5 min, the battery is subjected to constant current discharge under a 0.5C discharge current till the battery voltage is 3V, and a discharge capacity C1 of first cycle is recorded; the charge flow is repeated to fully charge the battery; and then the battery is placed in a -20°C environment to be left still for 60 min, is subjected to constant current discharge under a 0.5C discharge current till the battery voltage is 3V, a discharge capacity C2 is recorded, and the 0.5C discharge performance at -20°C is C2/C1*100%.

Different rate discharge performance at 25°C: the battery was left still for 5 min at a constant temperature and was subjected to constant current charge under a 1.5C charge current till the battery voltage was 4.45V, was subjected to 4.45V constant voltage charge till the charge current was 0.05C, after being left still for 5 min, the battery was subjected to constant current discharge under a 0.2C discharge current till the battery voltage was 3V, and a discharge capacity D1 of first cycle was recorded; the charge flow was repeated to fully charge the battery; and then the battery was subjected to constant current discharge under an xC discharge current till the battery voltage was 3V, a discharge capacity Dx was recorded at the time, and the different rate discharge performance is Dx/D1*100%, where x=2, 5.

The capacity retention ratio for 500-times cycles under a 12°C condition: a tested battery is left still for 30 min at a 12°C test temperature, is subjected to constant current charge under a 2C current to 4.45V, and then subjected to 4.45V constant voltage charge to 0.05C; and the battery is left still for 5 min, was subjected to constant current discharge under a 1C current to 3.0V, and is left still for 5 min. The above charge and discharge flows are repeated for 500 times, and the discharge capacity after each cycle is recorded. The capacity retention ratio of the battery after the 500^{th} cycle is calculated through the following equation: capacity retention ratio of the battery after 500^{th} cycle=(discharge capacity after 500^{th} cycle/discharge capacity of first cycle) x100%

Performance in examples 1-45 and comparative examples 1-3 is shown in the following table 2.

**Table 2**

| | Adhesive force between the first coating and the positive electrode, N/m | Adhesive force between the second coating and the negative electrode, N/m | Battery cell width, mm | Battery cell hardness, N | 0.5C discharge performance at -20°C | 2C rate discharge performance at 25°C | 5C rate discharge performance at 25°C | Capacity retention ratio of the battery cell cycled for 500 times at 12°C |
|---|---|---|---|---|---|---|---|---|
| Example 1 | 10.9 | 9.8 | 62.46 | 209 | 81.60% | 93.40% | 66.30% | 89.40% |
| Example 2 | 11.2 | 10.6 | 62.59 | 217 | 82.00% | 93.50% | 66.60% | 90.60% |
| Example 3 | 12 | 12.5 | 62.71 | 223 | 82.70% | 93.90% | 68.30% | 91.50% |
| Example 4 | 12.4 | 12.1 | 62.84 | 233 | 82.90% | 94.20% | 69.60% | 92.40% |
| Example 5 | 13.1 | 12.4 | 63.01 | 236 | 83.50% | 94.70% | 70.30% | 93.10% |
| Example 6 | 13.4 | 12.5 | 63.09 | 238 | 83.60% | 94.70% | 70.70% | 92.80% |
| Example 7 | 13.9 | 12.8 | 63.21 | 240 | 83.90% | 95.40% | 71.30% | 92.60% |
| Example 8 | 14.2 | 13 | 63.34 | 245 | 84.40% | 96.50% | 71.80% | 92.50% |
| Example 9 | 8.4 | 8.2 | 62.44 | 197 | 81.3% | 92.90% | 65.60% | 89.00% |
| Example 10 | 9.7 | 8.7 | 62.45 | 203 | 81.5% | 93.10% | 66.00% | 89.10% |
| Example 11 | 12.4 | 12.1 | 63.15 | 198 | 82.60% | 94.90% | 69.90% | 92.50% |
| Example 12 | 12.4 | 12.1 | 62.50 | 216 | 82.80% | 93.80% | 69.90% | 93.10% |
| Example 13 | 12.4 | 12.1 | 63.17 | 245 | 82.10% | 94.10% | 69.20% | 92.10% |
| Example 14 | 9.7 | 12.1 | 62.82 | 199 | 81.90% | 92.30% | 66.30% | 90.50% |
| Example 15 | 11.1 | 12.1 | 62.83 | 215 | 82.30% | 92.50% | 67.70% | 91.40% |
| Example 16 | 12 | 12.1 | 62.84 | 222 | 82.70% | 93.30% | 69.10% | 91.50% |
| Example 17 | 13.2 | 12.1 | 62.85 | 256 | 83.50% | 94.80% | 71.60% | 92.90% |
| Example 18 | 7.9 | 12.1 | 62.84 | 200 | 85.60% | 95.60% | 72.00% | 93.70% |
| Example 19 | 9.4 | 12.1 | 62.84 | 214 | 83.50% | 95.20% | 71.50% | 93.40% |
| Example 20 | 11.5 | 12.1 | 62.84 | 226 | 83.10% | 94.60% | 70.80% | 92.60% |
| Example 21 | 13.3 | 12.1 | 62.84 | 246 | 80.50% | 93.40% | 68.60% | 91.60% |
| Example 22 | 14.4 | 12.1 | 62.84 | 255 | 78.40% | 91.60% | 65.30% | 87.70% |
| Example 23 | 13.4 | 12.1 | 62.84 | 233 | 82.20% | 93.80% | 69.30% | 92.50% |
| Example 24 | 13.6 | 12.1 | 62.83 | 236 | 82.90% | 93.60% | 69.50% | 91.80% |
| Example 25 | 14 | 12 | 62.82 | 237 | 78.00% | 86.40% | 64.50% | 88.90% |
| Example 26 | 13.4 | 12 | 62.83 | 234 | 78.70% | 89.70% | 67.80% | 90.50% |
| Example 27 | 10.2 | 12 | 62.84 | 217 | 85.00% | 94.60% | 70.70% | 91.50% |
| Example 28 | 8.7 | 12 | 62.85 | 201 | 85.70% | 96.40% | 72.40% | 92.60% |
| Example 29 | 13.4 | 11.9 | 82.81 | 253 | 81.80% | 93.00% | 67.30% | 91.70% |
| Example 30 | 13.2 | 11.9 | 62.82 | 250 | 82.10% | 93.10% | 67.90% | 91.90% |
| Example 31 | 11.3 | 11.9 | 62.86 | 215 | 83.20% | 94.60% | 70.40% | 92.70% |
| Example 32 | 5.5 | 12.1 | 64.78 | 163 | 84.10% | 88.60% | 71.70% | 94.50% |
| Example 33 | 13.3 | 12.1 | 62.84 | 248 | 82.90% | 85.80% | 69.00% | 92.20% |
| Example 34 | 14.7 | 12.1 | 62.86 | 259 | 80.30% | 83.60% | 67.80% | 91.60% |
| Example 35 | 12.2 | 11.5 | 62.84 | 235 | 82.50% | 93.50% | 69.00% | 92.10% |
| Example 36 | 12.3 | 12.4 | 62.84 | 234 | 82.60% | 93.60% | 67.00% | 92.20% |
| Example 37 | 12.5 | 14 | 62.84 | 244 | 79.60% | 90.30% | 68.40% | 89.70% |
| Example 38 | 12.1 | 11 | 62.84 | 214 | 84.60% | 94.40% | 69.70% | 92.70% |
| Example 39 | 12.2 | 9 | 62.84 | 197 | 85.10% | 94.90% | 69.90% | 93.20% |
| Example 40 | 12.2 | 6 | 62.84 | 176 | 85.30% | 95.30% | 70.50% | 93.50% |
| Example 41 | 12.2 | 4.8 | 62.84 | 145 | 86.00% | 96.50% | 71.70% | 94.00% |
| Example 42 | 12.4 | 7.7 | 62.84 | 178 | 85.60% | 95.50% | 71.20% | 93.70% |
| Example 43 | 12.4 | 14.3 | 62.84 | 245 | 79.30% | 90.60% | 67.70% | 90.00% |
| Example 44 | 12.4 | 16.4 | 62.84 | 259 | 77.40% | 83.30% | 64.80% | 86.80% |
| Example 45 | 12.8 | 12.1 | 62.75 | 238 | 81.30% | 92.80% | 68.40% | 91.00% |
| Comparative example 1 | 8.9 | 11.8 | 62.21 | 240 | 74.50% | 84.30% | 60.90% | 78.50% |
| Comparative example 2 | 14.5 | 12.4 | 63.61 | 200 | 73.60% | 85.50% | 61.50% | 80.50% |
| Comparative example 3 | 1 | 1.2 | 62.65 | 70 | 84.20% | 93.00% | 69.20% | 90.80% |

Remark: the separator in the comparative example 3 has not first coating and second coating. Therefore, the adhesive forces of the comparative example 3 in the above table 2 respectively refer to the adhesive force between the first surface of the separator and the positive electrode and the adhesive force between the second surface of the separator or and the negative electrode.

### Result discussion

### 1. Discussion of influences of the inorganic coating (i.e., the heat-resistant layer), the first coating, and the second coating (with or without) and d1/d2 on battery performance

It may be known from the above table 1 that examples 1-45 meet a relational expression 1<d1/d2<10, where the first surface of the separator in examples 1-44 has the heat-resistant layer and the first coating located on the heat-resistant layer, and the second surface of the separator has the heat-resistant layer and the second coating located on the heat-resistant layer. The first surface and the second surface of the separator in example 45 respectively have the first coating and the second coating. The difference between comparative example 1 and examples 1-44 lies in d1/d2=1, the difference between comparative example 2 and examples 1-44 lies in d1/d2=11, and the difference between comparative example 3 and examples 1-45 lies in no coating on the separator.

It may be known from the above table 2 that the hardness of the batteries in examples 1-45 and comparative examples 1 and 2 is equivalent (the specification is required to be greater than 120 N). However, the discharge performance and the low-temperature cycle performance of the batteries in examples 1-45 are superior to those of the batteries in comparative examples 1 and 2. The primary reason is as follows: d1/d2 in comparative example 1 is too small, the gap between the bent portions of the battery is too small, when the negative electrode swells in the cycle process, the electrolyte is extruded to discharge to cause partial deletion of the electrolyte, which deteriorates the cycle performance. d1/d2 in comparative example 2 is too great, which results in a too large gap between the bent portions of the battery. When the electrolyte is consumed, partial deletion of the electrolyte is easily caused, which deteriorates the cycle performance.

The discharge performance and the low-temperature performance of the batteries in examples 1-45 and comparative example 3 are equivalent. However, the battery hardness in examples 1-45 is significantly greater than that in comparative example 3. The battery is low in hardness in comparative example 3, so that the battery is easy to deform and the winding structure is easy to mismatch during assembly of the battery, resulting in the safety risk; besides, due to the low hardness, in the charge and discharge processes of the battery, unordered swelling of the negative electrode will cause an uneven interface between the positive and negative electrodes to lead to partial lithium separation, which affects the battery performance.

It is apparent that by disposing a separate between the positive and negative electrodes, the separator is designed to include the substrate, and the first coating and the second coating respectively located on two opposite surfaces of the substrate, where the first coating includes the first polymer and where the distance d1 between adjacent positive and negative electrodes of the bent portion of the battery and the distance d2 between adjacent positive and negative electrodes of each of the straight portions of the battery meets 1<d1/d2<10, so that space may be provided to alleviate swelling of the negative electrode in the cycle process. Therefore, partial deletion of the electrolyte as the electrolyte is extruded to be discharged is avoided, a condition of partial deletion of the electrolyte as there is not enough electrolyte to fill the gap due to too large gap may be avoided, the thickness of the main body portion (i.e., the straight portions) of the battery is not significantly increased, the hardness of the battery may further be guaranteed to improve the adhesive force between the separate and the positive and negative electrodes, and therefore, the rate capability and the cycle performance of the battery are improved, and the loss of volume energy density of the battery is reduced, and the like.

It is found by further research in this application that compared with example 45 without the heat-resistant layer, the performance of example 4, particularly, electrochemical performance, is further improved. The main reason is as follows: the interface between the surface of the substrate and the polymer coating is relatively compact, which is harmful to transmission of lithium ions. The inorganic particles in the heat-resistant coating may loosen the interfacial structure, for example, the inorganic particles may bring some gaps, so that lithium ions are transmitted more smoothly, the diffusion resistance is reduced, and the like, and therefore, the electric performance of the electrochemical apparatus is further improved.

### 2. Discussion of number of winding layers

It may be known from tables 1 and 2, particularly examples 11-13, that, in some examples of this application, the number of winding layers of the battery is N, where N≥4. An increase of the number of winding layers causes increased extrusion of the inner layer of the bent portion of the battery. The greater the number of winding layers is, the larger the extrusion of the inner layer of the bent portion of the battery is. Local deletion of the electrolyte easily emerges. After the separator is used, space for electrolyte transmission and storage may be provided at the bent portion. For batteries with different numbers of winding layers, better electric performance may be obtained.

### 3. Discussion of the number of the first polymer

It may be known from tables 1 and 2, particularly examples 4 and 14-17, that in some examples of this application, in an area of 250 µm×200 µm on a surface of the first coating, a number of particles of the first polymer having the maximum length in the range of 10 µm and 30 µm are 10-30.. It is found by research in this application that by controlling the quantity of the first polymer within the range, a better thickness of the bent portion of the battery may be obtained. The greater the quantity is, the greater the corresponding d1 is.

### 4. Discussion of coverage rate of the first polymer

It may be known from tables 1 and 2, particularly examples 4 and 18-22, that in some examples of this application, an orthographic projected area of the first coating on the first surface accounts for 5-60% of an area of the first surface. It is found by research in this application that the too-low coverage rate of the first coating will make too low adhesive force between the separator and the electrode plate, so that the battery hardness is too low; the too-high coverage rate of the first coating will easily cause hole plug of the separator, which affects the transmission of the lithium ions, and finally affects the electric performance of the battery. By controlling the coverage rate of the first coating within the range described above, better battery hardness may be obtained, and better electric performance may be maintained.

### 5. Discussion of the type of the first polymer

It may be known from tables 1 and 2, particularly examples 4 and 27-28, that in some examples of this application, the first polymer includes a homopolymer formed by any one of the following monomers or a copolymer formed by at least two of the following monomers: vinylidene fluoride, hexafluoropropylene, ethylene, propylene, chloroethylene or chloropropene.

It shall be understood that the homopolymer formed by any one of the monomers or the copolymer formed by at least two of the monomer described above may realize the technical solution of this application to obtain ideal battery performance. However, it is found by further research that on the one hand, when conventional waterborne polyvinylidene fluoride (PVDF) as the first polymer forms the first coating of the separator, although the gap may be reserved for swelling of the negative electrode due to its large particle size, as a result of the high softening point of the material, the interfacial adhesive force is low, so that the energy density loss of the battery is great (the energy density loss decreases by about 2% compared with that in non-waterborne PVDF); moreover, the battery is low in hardness, so that the battery is easy to deform and the winding structure is easy to mismatch, resulting in the safety risk; besides, due to the low hardness, in the charge and discharge processes of the battery, unordered swelling of the negative electrode will cause an uneven interface between the positive and negative electrodes to lead to partial lithium separation, which affects the battery performance. On the other hand, when non-waterborne PVDF as the first polymer forms the first coating of the separator, after being hot-pressed, the interfacial gap is very small, which is easy to hinder transmission of the electrolyte. Insufficient electrolyte is easy to occur on the bent portion and the straight portion of the battery, which results in insufficient lithium intercalation and even lithium separation. When at least one of hexafluoropropylene, ethylene, propylene, chloroethylene or chloropropene is added into PVDF to form the first coating, an ideal gap may be provided for swelling of the negative electrode, and the adhesive force between the separator and the positive and negative electrodes may be guaranteed.

### 6. Discussion of the softening point of the first polymer

It may be known from tables 1 and 2, particularly examples 4 and 25-28, that in some examples of this application, the softening point of the first polymer is 90-150°C. It is found by research in this application that if the softening point of the first polymer is too low, the separator is easily subjected to a hole-plugging phenomenon, which affects the transmission of lithium ions, thereby finally affecting the electric performance of the battery. If the softening point of the first polymer is too high, the adhesive force between the separator and the electrode plate will be reduced, so that the active material falls in the cycle performance, which finally affects the electric performance of the battery. By controlling the softening point of the first polymer within the range described above, ideal electric performance may be obtained.

### 7. Discussion of Dv50+ of the first polymer

It may be known from tables 1 and 2, particularly examples 4 and 29-31, that in some examples of this application, Dv50+ of the first polymer is 3-16 µm. It is found by research in this application that the greater the Dv50 of the first polymer is, the easier the desired gap (i.e., d1 described above) is prepared on the bent portion of the battery. However, too great Dv50 will also reduce the volume energy density of the battery. By controlling the Dv50 of the first polymer within the range described above, the loss of the volume energy density may be reduced while the space is reserved for swelling of the negative electrode.

### 8. Discussion of the coated surface density of the first coating

It may be known from tables 1 and 2, particularly examples 4 and 32-34, that in some examples of this application, the coated surface density W1 of the first coating is 0.4-2 g/m². It is found by researches in this application that the less the coated surface density W1 of the first coating is, the less the thickness of the bent portion of the battery. By controlling the coated surface density W1 of the first coating within the range described above, better performance may be achieved.

### 9. Discussion of type, Dv50, and coated surface density of the second coating of the second polymer

It may be known from tables 1 and 2, particularly examples 4 and 35-36, that in some examples of this application, the second polymer includes a homopolymer formed by any one of the following monomers or a copolymer formed by at least two of the following monomers: ethyl acrylate, butyl acrylate, ethyl methacrylate, styrene, chlorostyrene, fluorostyrene, vinyltoluene, acrylic acid, methacrylic acid, maleic acid, acrylonitrile or butadiene. Any one second polymer in the range described above may acquire the stronger adhesive force between the separator and the negative electrode. It may be known from tables 1 and 2, particularly examples 4 and 37-41, that in some examples of this application, Dv50+ of the second polymer is 0.2-8 µm. It may be known from tables 1 and 2, particularly examples 4 and 42-44, that in some examples of this application, the coated surface density W2 of the first coating is 0.1-1 g/m².

The above are examples listed in this application. However, as all examples are inexhaustibile by the applicant, other equivalent examples made based on the teaching of this applicant all fall within the protection range of this application. To sum up, this application provides a simple and feasible method suitable for industrial production to prepare a secondary battery with higher rate performance, cycle performance and hardness.

Citation of "some embodiments" "partial embodiments", "one embodiment", "another embodiment", "example", "specific example" or "partial examples" in the entire specification represent the meaning that at least one embodiment or example includes specific features, structures, materials or characteristics described in the embodiment or example. Therefore, descriptions emerging everywhere in the entire specification, for example, "in some embodiments", "in embodiments", "in one embodiment", "in another example", "in one example", "in specific examples", or "examples" are unnecessary citations of same embodiments or examples in this application. Besides, the specific features, structures, materials or characteristics herein may be combined in one or more embodiments or examples in any appropriate way.

Although illustrative examples have been demonstrated and described, those skilled in the art shall understand that the above examples cannot be construed as limitations to this application, and may be changed, replaced, and modified without departing from the spirit, principle, and range of this application.

## Claims

1. A secondary battery, comprising a positive electrode, a negative electrode, and a separator disposed between the positive electrode and the negative electrode, wherein the positive electrode, the separator, and the negative electrode are sequentially stacked and wound to form a winding structure including a bent portion and a straight portion; the separator comprises a substrate, wherein the substrate has a first surface and a second surface opposite to the first surface; a first coating is disposed on the first surface of the substrate, and the first coating comprises a first polymer, and a second coating is disposed on the second surface of the substrate, wherein
in the bent portion of the winding structure, the distance between adjacent positive and negative electrodes is d1, and in the straight portion of the winding structure, the distance between adjacent positive and negative electrodes is d2, wherein 1<d1/d2<10.

2. The secondary battery according to claim 1, wherein in an area of 250 µm×200 µm on a surface of the first coating, a number of particles of the first polymer having the maximum length in the range of 10 µm and 30 µm are 10-30.

3. The secondary battery according to claim 1, wherein the first polymer comprises a homopolymer formed by any one of the following monomers or a copolymer formed by at least two of the following monomers: vinylidene fluoride, hexafluoropropylene, ethylene, propylene, chloroethylene or chloropropene.

4. The secondary battery according to claim 1, wherein a softening point of the first polymer is 90-150°C.

5. The secondary battery according to claim 1, wherein Dv50 of the first polymer is 3-16 µm.

6. The secondary battery according to claim 1, wherein an orthographic projected area of the first coating on the first surface accounts for 5-60% of an area of the first surface.

7. The secondary battery according to claim 1, wherein a coated surface density W1 of the first coating is 0.4-2 g/m².

8. The secondary battery according to claim 1, wherein the second coating comprises a second polymer, and wherein Dv50 of the second polymer is 0.2-8 µm.

9. The secondary battery according to claim 8, wherein the second polymer comprises a homopolymer formed by any one of the following monomers or a homopolymer formed by at least two of the following monomers: ethyl acrylate, butyl acrylate, ethyl methacrylate, styrene, chlorostyrene, fluorostyrene, vinyltoluene, acrylic acid, methacrylic acid, maleic acid, acrylonitrile or butadiene.

10. The secondary battery according to claim 1, wherein a coated surface density W2 of the second coating is 0.1-1 g/m².

11. The secondary battery according to claim 1, wherein an adhesive strength between the first coating and the positive electrode is 4-20 N/m, or an adhesive strength between the second coating and the negative electrode is 5-20 N/m.

12. The secondary battery according to claim 1, wherein an adhesive strength between the first coating and the positive electrode is 3-15 N/m, or an adhesive strength between the second coating and the positive electrode is 5-20 N/m.

13. The secondary battery according to claim 1, wherein numbers of winding layers of the positive and negative electrodes are N, and wherein N≥4.

14. The secondary battery according to claim 1, wherein the first coating is disposed on the bent portion.

15. An electrochemical apparatus, comprising the second battery according to claims 1-14.

16. An electronic apparatus, comprising the secondary battery according to claims 1-14.
